## Europäisches Patentamt

## European Patent Office

## Office européen des brevets

(19)

(11) Numéro de publication: **0 238 861 B1**

(12)

# FASCICULE DE BREVET EUROPEEN

(45) Date de publication du fascicule du brevet:
**25.04.90**

(51) Int. Cl.⁴: **G01M 3/32**

(21) Numéro de dépôt: **87102495.6**

(22) Date de dépôt: **21.02.87**

(54) Procédé et dispositif pour le contrôle d'étanchéité sur des emballages.

(30) Priorité: **22.03.86 EP 86103958**

(43) Date de publication de la demande:
**30.09.87 Bulletin 87/40**

(45) Mention de la délivrance du brevet:
**25.04.90 Bulletin 90/17**

(84) Etats contractants désignés:
**AT BE CH DE ES FR GB IT LI LU NL SE**

(56) Documents cités:
**WO-A-81/01333**
**US-A- 2 467 767**
**US-A- 3 331 237**
**US-A- 3 504 528**

(73) Titulaire: **SOCIETE DES PRODUITS NESTLE S.A., Case postale 353, CH-1800 Vevey(CH)**

(72) Inventeur: **Rossé, Meinrad, Ch. de Vassin 38, CH-1814 La Tour-de-Peilz(CH)**
Inventeur: **Rossier, Marc-Henri, Ch. de Ballègue, CH-1066 Epalinges(CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un procédé pour le contrôle d'étanchéité sur des emballages conformément au préambule de la revendication 1. L'invention concerne en outre le dispositif pour la mise en œuvre de ce procédé.

On connaît déjà des dispositifs pour la mise en évidence non destructive de fuites sur des emballages souples. Le modèle d'utilité allemand G 8 128 651 concerne un tel dispositif comportant une chambre de mesure susceptible de recevoir l'échantillon à tester et un palpeur dans ladite chambre, sensible par contact aux variations de pression, ledit palpeur étant relié à un calculateur permettant d'enregistrer lesdites variations de pression en fonction du temps. Les inconvénients d'un tel dispositif sont que les cellules de mesure sont disposées dans la chambre de mesure, ce qui nécessite, compte tenu de la fragilité et de la sensibilité de telles cellules, un maniement précautionneux. D'autre part, comme le palpeur est simplement sensible par contact, on ne peut s'attendre à une grande sensibilité dans la mesure, compte tenu des risques de non planéité de l'échantillon à mesurer. Finalement, ce dispositif ne permet des mesures que sur des emballages souples.

On connaît également d'autres dispositifs pour la mise en évidence de fuites sur des objets ou emballages rigides. Le système selon le brevet US 2 467 767 décrit une chambre de mesure fonctionnant en surpression et munie de manomètres à liquide. Le système est à commande entièrement manuelle, sans aucun automatisme. Toutes les valeurs de pression doivent être relevées par observations successives de l'opérateur qui en déduit par comparaison la nature des fuites éventuelles. Le procédé a comme principale limitations en matière de microfuites la difficulté d'àpprécier la faible différence des valeurs successivement lues sur le manomètre raccordé à la chambre de test, la portée de mesure de ce manomètre étant au moins égale à la pression totale du fluide contenu dans la chambre. De ce fait la fiabilité des mesures est fonction de paramètres humains, c'est-à-dire de la qualité des observations de l'opérateur. Enfin le brevet US 2 467 767 ne fait aucune mention de tests en dépression et n'est pas prévu pour être appliqué à la mesure de fuites sur des objets ou emballages non rigides.

Le brevet US 3 331 237 décrit un système comportant une sensibilité améliorée par l'emploi d'un manomètre différentiel, mais il ne s'applique qu'à des objets solides présentant une cavité intérieure susceptible d'être raccordée à l'équipement de mesure par un tuyau de liaison. Il n'est donc applicable ni à des emballages tels des sachets souples, ni à des emballages rigides contenant des produits, le raccordement n'étant pas possible sans détruire l'emballage.

Le brevet US 3 504 528 présente un système qui comporte lui aussi une mesure différentielle, la comparaison s'effectuant entre deux chambres, l'une de mesure, l'autre de référence. Ces deux chambres sont symétriquement insérées dans deux circuits dérivés en parallèle à partir d'une première chambre initialement chargée par un gaz sous pression. Le système n'est applicable qu'à des objets solides, tels des douilles d'obus non déformables et le test ne se fait qu'en surpression. De plus, le système présente l'inconvénient d'un branchement permanent du capteur différentiel aux deux chambres, ce qui peut conduire à une surcharge du dit cap-. teur, supposé très sensible, lorsque les vannes ne sont pas parfaitement synchronisées ou en cas de fuite brusque sur l'une des chambres.

La publication Wo 8 101 333 revendique un dispositif dans lequel on fait intervenir le transfert de quantités prédéterminées d'un gaz, la mesure différentielle de la pression s'effectuant par comparaison entre deux branches symétriques en volumes ou pour le moins proportionnelles entre elles. Destiné selon l'auteur au contrôle d'objets de forme définie et présentant une cavité dont on veut tester l'étanchéité, le dispositif n'est pas prévu pour être appliqué à des sachets souples contenant un produit par exemple pulvérulent dont la forme et le volume varient en fonction de la pression appliquée et de la quantité de gaz contenue dans le sachet, ces variations pouvant être importantes, sans commune mesure avec celles provenant des tolérances de fabrication d'un objet solide à la forme duquel la chambre de mesure est adaptée. Il présente de plus l'inconvénient de nécessiter la modification d'au moins deux volumes ou chambres en cas de changement des dimensions de l'objet à tester.

Par ailleurs, les pressions dans le système sont fonction de la pression d'alimentation, pour laquelle aucun dispositif de régulation ou de mesure n'est prévu, rendant de ce fait aléatoire la détection d'une fuite majeure lors du processus décrit.

La présente invention propose un procédé de mesure et un dispositif pour sa mise en œuvre permettant d'obvier aux inconvénients et aux limitations de la technique antérieure.

Selon l'invention, ce but est atteint selon un procédé du type précité présentant les caractéristiques figurant dans la partie caractérisante de la revendication 1.

Le moyen pour ajuster la pression peut travailler aussi bien en dépression qu'en surpression.

Le procédé selon l'invention a pour but le test et la mesure non destructifs de l'étanchéité d'emballages pouvant contenir des produits sous forme de poudres, de granulés, de pâtes ou de liquides, ces emballages étant souples, semi-rigides ou rigides, l'essai s'effectuant de préférence en dépression pour des emballages souples et généralement en surpression pour des emballages rigides contenant des produits liquides.

Destinée à une utilisation industrielle, le procédé selon l'invention propose une conception essentiellement automatique ne faisant pas appel à l'interprétation de l'opérateur, les critères d'acceptation ou de rejet étant constitués par des paramètres prédéterminés introduits comme données dans les circuits électroniques de système de mesure, les résultats des tests et mesures pouvant être automatiquement enregistrés pour en tirer une statistique ou autre traitement ultérieurs. Une variante de réalisation prévoit un enregistreur graphique de la variation de la pression et des totalisateurs, rendant compte de résultat des tests. Pour ce faire, les paramètres de pression et de temps sont préréglés par voie électrique, en fonction du type d'emballage à contrôler.

Appliqué au contrôle de la production, le procédé permet tout aussi bien de procéder par échantillonnage ou à la vérification systématique de tous les emballages. Le procédé a ainsi pour but de distinguer les divers aléas de la production tels les défauts grossiers d'étanchéité, les microfuites, l'absence éventuelle de produit dans l'emballage et même l'absence d'emballage lors d'une mesure.

L'absence d'emballage, les grosses fuites sur l'emballage et l'inétanchéité de la chambre de mesure sont détectées à l'aide de la cellule de pression différentielle. Pour les emballages souples, on effectue le contrôle des fuites sur une chambre de mesure ayant une forme adaptée à l'emballage de manière à en limiter sa déformation.

Le procédé consiste à enfermer l'objet à tester dans une chambre étanche munie d'un couvercle amovible dans laquelle on ajuste initialement la pression à une valeur prédéterminée, puis à mesurer l'évolution de cette pression en la comparant automatiquement à des valeurs de référence préétablies, la valeur initiale de cette pression pouvant être supérieure ou inférieure à celle régnant dans l'emballage en son état libre, les valeurs de référence étant déterminées par expérience en fonction de critères, propres à chaque type et dimension d'emballage, quantifiant les divers états possibles de celui-ci. La durée de mesure est normalement comprise entre 2 et 20 secondes suivant l'emballage à tester. La pression est également fonction de l'échantillon à tester: elle est généralement comprise entre 100 et 450 torrs si on travaille en dépression. Dans le cas de sachets de 100 g contenant du café soluble, il est préférable de maintenir une dépression inférieure à 275 torrs, car autrement le sachet craque aux pliures.

Si on travaille en surpression, la valeur de p1 est de l'ordre du bar.

L'invention concerne en outre un appareil pour la mise en œuvre de ce procédé comprenant reliés en ligne par des canalisations:
— un moyen pour ajuster la pression,
— une électrovanne V1 servant d'actuateur pour le réglage de la pression p1,
— un réservoir de volume X1
— une cellule de pression relative pA,
— une électrovanne V3 permettant de séparer la partie comprenant le réservoir de celle comprenant la chambre de mesure,
— une électrovanne V4 aux extrémités de laquelle on mesure une pression différentielle avec
— une cellule de pression différentielle pB et
— une chambre de mesure susceptible de recevoir l'emballage, ladite chambre comportant un couvercle pour son ouverture et sa fermeture.

D'autres caractéristiques apparaîtront en référence aux figures. L'appareil selon l'invention comporte également un dispositif électronique pour l'introduction et la mémorisation des paramètres de pression et de temps, la commande séquentielle des électrovannes, l'asservissement de la pression dans le réservoir, l'affichage des résultats des mesures et leur mise à disposition pour en permettre l'enregistrement et/ou le traitement par un dispositif extérieur.

Le procédé selon l'invention sera mieux expliqué après description d'un exemple de réalisation de l'appareillage destiné à sa mise en oeuvre, sans. être considéré de manière limitative. A ce sujet il y a à remarquer que c'est seulement la mesure de δp à p1 qui est revendiquée.

Fig. 1 est un schéma de l'appareil selon l'invention, travaillant en dépression

Fig. 2 est une représentation plus détaillée de la chambre de mesure de la Fig. 1 et

Fig. 3 est un schéma partiel de l'appareil selon Fig. 1 avec une variante de mesure de Δp.

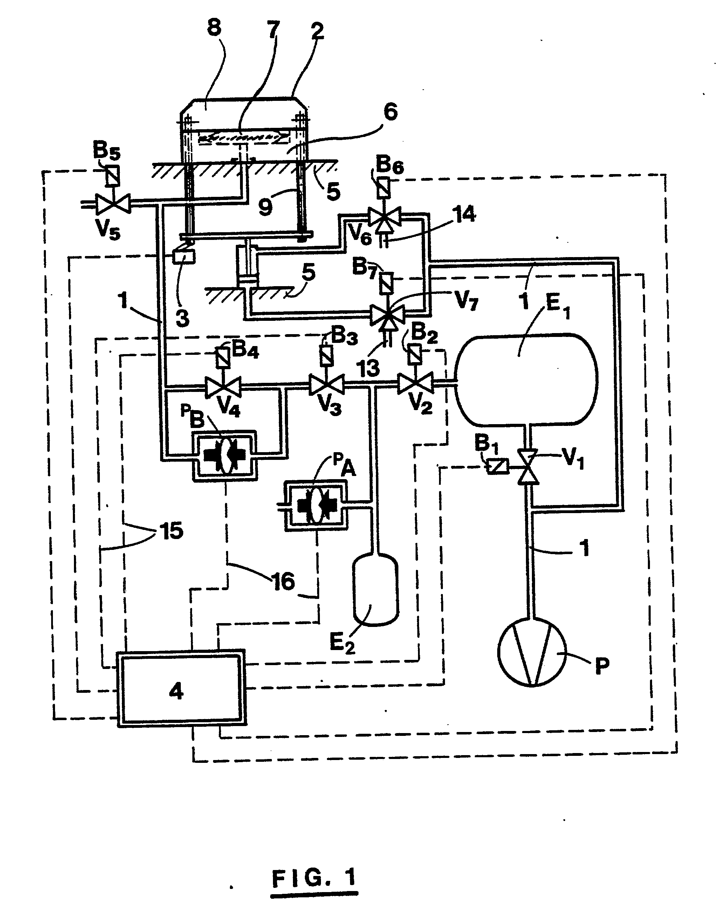

Selon Fig. 1, le dispositif comprend une pompe à vide P, alimentée par le secteur (non représenté) et reliée à tout le système par des canalisations (1). Entre la pompe à vide P et la chambre de mesure (2), on dispose une vanne V1 permettant de commander le niveau du vide dans le dispositif, un réservoir E1 de volume X1, des vannes V2, V3, V4 et V5 dont les fonctions seront exposées ci-dessous. On dispose, en outre, en dérivation par rapport au circuit principal entre les vannes V2 et V3, une cellule de mesure PA pour la mesure et le réglage par asservissement de la pression dans le dispositif conjointement avec au moins la vanne V1.

Une seconde chambre accessoire E2 de volume X2<X1 est volontiers placée en dérivation : la présence de ces deux réservoirs E1 et E2 permet de faire des mesures sur des emballages de volumes très variés sans nécessiter une adaptation particulière des volumes X1 et X2, la chambre X2 ne jouant pratiquement aucun rôle dans la mesure des fuites proprement dites.

La cellule des mesure différentielle PB disposée en dérivation de la vanne V4 permet une mesure très sensible de la différence des pressions amont et aval de cette vanne lorsqu'elle est fermée. C'est cette cellule qui sera utilisée pour la mesure de l'évolution de la pression dans la chambre de mesure.

Les vannes V6 et V7 sont directement reliées à la pompe P et assurent, comme exposé ci-après, l'ouverture et la fermeture de la chambre de mesure (2) par élévation ou abaissement du couvercle (8) par rapport à la base (6).

Au niveau de la chambre de mesure (2), le détecteur (3) a pour fonction de marquer la fin de la course lors de la fermeture de ladite chambre, ce afin d'autoriser la suite du processus.

Chacune des vannes V1 à V7 comprend une bobine d'induction B1 à B7 électriquement connectée par des liaisons (15) au dispositif électronique de commande (4) qui comporte le programme séquentiel d'ouverture et de fermeture des dites électrovannes.

Ces électrovannes étant des types usuels du commerce, il n'en sera pas donné plus ample description.

Les cellules de mesure de pression PA et PB sont également reliées électriquement par des liaisons (16) au dispositif électronique (4).

Ce sont également des types usuels du commerce à fonctionnement piézo-électrique, inductif, résistif ou capacitif, donnant un signal proportionnel à la pression à mesurer. Remarquons simplement que la cellule PA doit avoir une portée au moins égale à la pression utilisée, alors que la cellule différentielle PB peut être choisie très sensible. Comme l'indique la Fig. 1, la cellule PA peut parfaitement être du type différentiel, l'une des entrées étant à l'air libre, donnant ainsi une mesure de la pression relative dans le système négative dans le présent cas ou positive si le système fonctionne en surpression, connecté à un dispositif générant du gaz ou de l'aire comprimé en lieu et place de la pompe à vide P.

On remarquera la disposition essentiellement linéaire du circuit pneumatique allant de la pompe P à la chambre de mesure (2), seul le circuit auxiliaire de commande du piston de fermeture étant disposé en parallèle.

Le dispositif électronique (4) comprend dans une forme préférée de réalisation un petit automate à logique programmable pouvant ou non comporter un microprocesseur et dont on trouve de nombreux exemples dans le commerce, une partie analogique pour l'amplification des signaux issus des capteurs et l'affichage de leur mesure sous forme analogique, un convertisseur analogique-numérique pour l'affichage numérique et un ensemble de circuits effectuant la comparaison à des valeurs de référence préalablement affichées et mémorisées au moyen de potentiomètres ou par l'intermédiaire d'un clavier ou encore de commutateurs numériques.

La réalisation de tels circuits étant familière à l'homme de l'art, il n'en sera pas fait plus ample description et ils ne sont pas représentés, si ce n'est pour préciser que les valeurs mesurées et le résultat des comparaisons décrites plus loin sont également disponibles sous forme électrique pour servir de grandeurs d'entrée à un enregistreur et pour actionner des totalisateurs ou tout autre moyen d'enregistrement des résultats extérieur au dispositif selon l'invention.

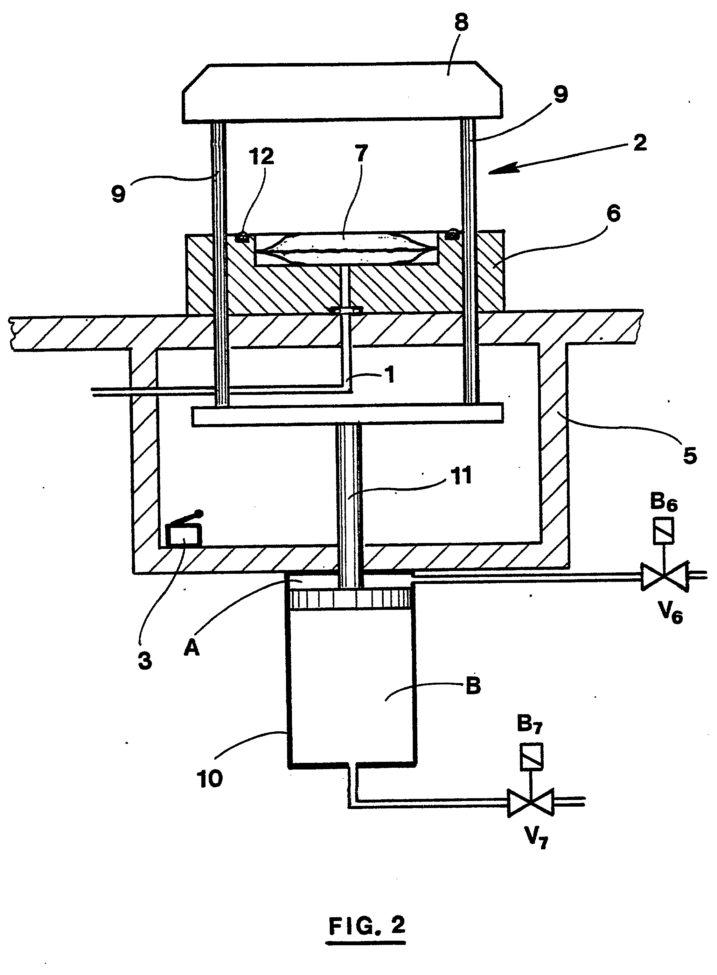

En se référant à la Fig. 2, la chambre de mesure (2) comporte un élément fixe (6) disposé sur un châssis (5) et susceptible de recevoir les échantillons à tester (7). La canalisation (1) arrive jusqu'à cette chambre de mesure (2), qui comporte en outre un élément mobile (8) ayant des guides (9) et solidaire d'un système à cylindre (10) et à piston (11). L'ouverture et la fermeture de la chambre de mesure, à savoir le déplacement de la partie mobile (8) se fait grâce au jeu du vide et de la pression atmosphérique sur l'une et l'autre face du piston (11). La chambre comporte finalement au moins un joint d'étanchéité (12). L'ouverture et la fermeture de la chambre de mesure peut également être envisagée avec un couvercle (8), non pas à translation, mais à pivotement ou basculement autor d'un axe. La vitesse de translation du couvercle peut être limitée par l'adjonction d'étrangleurs entre V6, V7 et le piston ou aux sorties "air libre" desdites vannes.

Le fonctionnement du dispositif selon l'invention ci-dessous ne doit pas être interprété dans un sens limitatif, car mentionnant aussi bien des caractéristiques du procédé que du dispositif selon l'invention :

on fait le vide grâce à la pompe P jusqu'à la vanne V3 initialement fermée, les vannes V1, V2 et V4 étant ouvertes, V5 fermée. La dépression obtenue, mesurée par la cellule PA, est affichée sur le dispositif électronique et comparée à une valeur de consigne prédéterminée p1. Sitôt cette valeur atteinte, la vanne V1 est fermée et le reste, sauf si l'on désire modifier la valeur de p1 entre les diverses phases du processus de test puis de mesure.

Accessoirement, la dépression fournie par la pompe à vide est également utilisée pour ouvrir ou fermer en temps utile la chambre de mesure par le jeu des vannes à trois voies V6 et V7 représentées à la Fig. 1.

Pour avoir, avant toute mesure, une chambre de mesure ouverte, on ouvre la vanne V6 pour faire le vide sur la partie A (Fig. 2) et on ferme la vanne V7, de manière à avoir sur la partie B (Fig. 2) la pression atmosphérique, la partie mobile (8) venant ainsi en position haute, la partie B étant à la pression atmosphérique via la voie 13 de la vanne V7. On place alors l'échantillon (7) dans la chambre de mesure : on ouvre la vanne V7 de manière à avoir le vide sur la partie B, et l'on ferme la vanne V6 pour mettre la partie A à la pression atmosphérique via la voie 14.

Les électrovannes V1, V6 et V7 resteront dans les états précités pour toute la suite de l'essai. Le piston (11) se déplace vers le bas jusqu'au détecteur de fin de course (3) : l'échantillon (7) est alors prêt à subir le test d'étanchéité.

Au préalable, on effectue le contrôle d'étanchéité de la chambre de mesure, de présence de l'échantillon et de son éventuelle perforation grossière de la manière suivante : si l'échantillon est de faible taille, on ouvre la vanne V3, et on ferme la vanne V2 de manière à ne travailler que sur la chambre E2. Si l'échantillon est de taille plus grande, on ouvre les vannes V2 et V3, de manière à travailler sur les chambres E1 et E2. Il s'établit dans tout le système une pression p2>p1. On compare comme décrit plus loin la valeur $\Delta p = p2-p1$ à trois seuils p3, p4 et p5 pour déterminer d'une part si l'échantillon est absent ou grossièrement perforé et d'autre part si la chambre de mesure est inétanche. Les appareils destinés seulement à la mesure d'emballage d'assez grandes dimensions ne nécessitent pas l'utilisation du réservoir E2. Celui-ci peut alors être supprimé, de même que l'électrovanne V2.

Ce contrôle rapidement effectué, on peut procéder au test d'étanchéité proprement dit en fermant l'électrovanne V4, isolant ainsi la chambre de mesure du reste du circuit pneumatique.

La cellule PB mesure alors la différence de pression $\delta p$ entre la chambre de mesure et la partie comportant le réservoir dont la pression p2 sert de référence.

Cette différence de pression, nulle à l'instant de la fermeture de l'électrovanne V4, le restera ou non selon que l'échantillon est étanche ou non. La valeur de $\delta p$ est observable sur la partie affichage de l'organe électronique (4) et enregistrable sur un enregistreur graphique usuel.

Comme décrit plus loin, l'organe électronique procède alors à la comparaison de δp à une valeur limite préétablie caractérisant le degré d'étanchéité acceptable.

La mesure étant terminée, on ouvre la vanne V5 de manière à rompre le vide dans la chambre de mesure. Pour ouvrir ladite chambre, on ouvre V6 pour faire le vide en A et on referme la vanne V7 pour avoir la pression atmosphérique en B via la voie 13. Le piston (11) se déplace vers le haut. Le dispositif est ainsi prêt pour une nouvelle mesure.

Les deux principales phases de mesure selon le procédé sont décrites ci-dessous de manière plus détaillée pour le fonctionnement en dépression.

La principale d'entre elles consiste à la mesure des microfuites proprement dites, l'autre ayant trait à la vérification de la présence d'un emballage et de l'absence de fuite majeure.

La pression dans les réservoirs E1 et E2 ayant été comme décrit ajustée à une certaine valeur prédéterminée p1, valeur choisie par expérience pour un type d'emballage donné, la chambre de mesure ayant été fermée, de même que la vanne V5, les électrovannes V3 et V4 sont ouvertes.

Une nouvelle valeur de pression p2 va s'établir dans le système, fonction du transfert de gaz entre la chambre de mesure et la partie du circuit comportant les réservoirs E1 et E2.

Toutes choses étant égales par ailleurs, l'écart $\Delta p = p2-p1$ sera approximativement proportionnel au volume d'air contenu dans la chambre, donc à la différence entre le volume de la chambre et le volume initial de l'emballage. Il est donc évident que l'absence d'emballage donnera un écart $\Delta p$ supérieur à celui obtenu avec un emballage étanche dont le volume n'est pas librement expansible. D'où la possibilité de comparer électriquement la différence $\Delta p$ des valeurs successives p1 et p2 de la pression à un seuil de référence p3 préétabli par calcul ou par expérience pour un emballage donné.

Il en est de même d'un défaut grossier d'étanchéité de l'emballage, l'écart $\Delta p$ étant toutefois plus faible puisqu'une partie du volume est occupée par le produit emballé. D'où la possibilité de comparaison à un seuil de référence p4, critère d'un emballage grossièrement perforé, dont la valeur est elle aussi déterminée par expérience en disposant volontairement dans la chambre un emballage perforé. La valeur ainsi déterminée est volontiers corrigée d'une petite marge de sécurité avant d'être introduite comme paramètre sur le dispositif électronique (4), ce afin de tenir compte de petites différences dans les dimensions ou le remplissage des emballages. Enfin, une fuite entre le couvercle (8) et la base (6) à l'endroit du joint (12) donnera une différence de pression encore plus grande. Le système revenant à la pression atmosphérique, un seuil p5 sera dépassé.

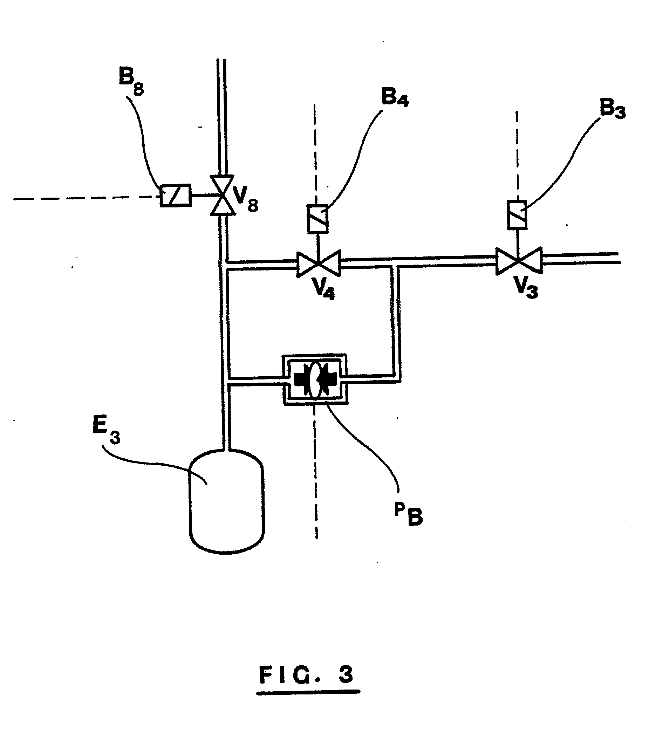

Le calcul de l'écart des pressions p1 et p2 n'étant pas nécessairement aisé dans le cas de faibles différences, la Fig. 3 montre à titre d'exemple une variante d'exécution préférée qui permet la mesure directe de $\Delta p$ au moyen de la cellule de mesure différentielle PB dont on met à profit la haute sensibilité.

On dispose en plus par rapport au montage de la Fig. 1 d'une vanne V8 et de sa bobine d'induction B8 et d'une chambre E3 de faible volume X3. Au départ les vannes V3, V4 et V8 sont fermées. On ouvre V4 puis V3. La chambre E3 est alors à la pression p1. On ferme V4 puis on ouvre V8, la pression p2 s'établissant dans la chambre E3 et sur l'une des entrées de la cellule PB, l'autre entrée restant à la pression p1. On peut ainsi directement afficher $\Delta p$ sur le dispositif électronique (4) et comparer sa valeur aux seuils préalablement introduits par exemple par affichage sur des potentiomètres.

En variante, le test ci-dessus s'effectue sans X3 ni V8 en refermant V2, et en ouvrant V3 et V4. L'ensemble réservoir E2 et chambre de mesure (7) est alors à une pression p2. On ferme ensuite V4 et l'on ouvre V2. La cellule PB mesure un différence de pression $\Delta p'-p2-p1'$, p1' étant une valeur proche de p1 si X2<<X1.

Ensuite, si la pression p2 ou p1' est suffisamment voisine de p1, c'est-à-dire si le volume mort dans la chambre de mesure contenant l'emballage est suffisamment faible, on effectue la détection et la mise en évidence de fuites à la pression p2 dans le système.

Par contre si p1 est très différent de p2, il peut être préférable de rétablir la pression dans tout le système à sa valeur initiale p1 avant d'effectuer la mesure de la fuite sur l'emballage considéré.

La mesure de la fuite d'un emballage s'effectue ensuite en isolant la partie contenant la chambre de la partie comprenant les réservoirs après avoir ouvert un court instant puis en refermant l'électrovanne V4.

Deux cas sont alors possibles : si l'emballage est étanché les pressions vont rester stables dans les système, la valeur δp mesurée par la cellule PB est nulle et le reste.

Si au contraire l'emballage fuit, la pression dans la cellule de mesure augmente par l'écoulement de l'aire confiné dans l'emballage. Il s'en suit une variation dδp/dt, donc après un certain temps une différence de pression δp aux entrées de la cellule PB.

Le signal électrique analogique correspondant à la valeur de δp et donc proportionnel à la fuite peut donc être enregistré sous une forme graphique et simultanément affiché sur un instrument et encore comparé à un seuil, l'affichage sous forme analogique étant volontiers affiché sur un instrument comportant une échelle de 200%, la valeur 100% correspondant au seuil limite d'acceptabilité de l'étanchéité.

Le critère d'acceptation de l'emballage, correspondant à la valeur maximum de la micro-fuite admissible peut être fixé électroniquement sous forme d'un seuil de comparaison de δp usuellement compris entre 0 et 50 torrs portant sur la variation de pression pendant une durée prédéterminée par exemple 2 à 60 secondes pour une valeur de p1 fixée. Ces paramètres restent alors valables pour le type d'emballage considéré.

Il est évident que le circuit électronique pourrait aussi utiliser le critère dδp/dt par différentiation, ce qui est toutefois moins aisé.

Par ailleurs, il faut relever que les opérations de test puis de mesure doivent se dérouler relativement rapidement, non seulement pour des raisons de productivité, mais parce que la quantité d'air ou de gaz contenue dans l'emballage est limitée. La mesure de δp doit aussi être effectuée pendant qu'une différence de pression suffisante règne entre l'intérieur de l'emballage et la chambre de mesure. Pour les mêmes raisons, la chambre de mesure devra comporter un volume mort aussi faible que possible, ce afin d'assurer la meilleure sensibilité de la mesure. Elle sera donc adaptée à la forme des échantillons à mesurer soit lors de sa fabrication si elle est destinée à un type d'emballage unique, soit par adaptation de pièces accessoires de remplissage si elle doit pouvoir s'adapter à plusieurs formes d'échantillons.

L'explication ci-dessus démontre accessoirement que le volume des réservoirs E1 et E2 n'intervient pas sur la mesure de δp. Cette phase de mesure exige seulement que la pression dans les réservoirs reste stable puisque servant de référence à la cellule pB.

La pratique confirme le raisonnement évident qu'il suffit que le réservoir E1 soit assez grande pour permettre une dépression adéquate dans la chambre de mesure, 500 torrs par exemple sans perdre de temps à pomper à travers V1.

L'emballage contenant initialement un certain volume de gaz sous une certaine pression, son confinement dans une enceinte étanche soumise après fermeture à une pression différente de celle de l'atmosphère va engendrer une déformaltion élastique si le matériau est souple ou semi-rigide, soit un gonflement ou une compression selon que la pression appliquée à l'enceinte de mesure est inférieure ou supérieure à la pression atmosphérique. Sauf dans le cas d'un sachet infiniment déformable, une différence de pression sera néanmoins créée entre l'emballage et le volume mort de la chambre, qui persistera ou évoluera selon le degré d'étanchéité.

A la lmitite, dans le cas d'un emballage particulièrement déformable tel un sachet plat, sa surface se mettra en contact avec les faces supérieures et inférieures de la chambre dont on a vu plus haut qu'il y a lieu de la maintenir dans des dimensions aussi faibles que possibles de manière à limiter le volume mort.

Ce cas particulier est représenté à la Fig. 2, la face supérieure de la chambre étant simplement la face plane du couvercle.

L'étude de la séquence de mesure des fuites montre que la séquence du contrôle préalable est indispensable puisqu'un emballage grossièrement perforé ou absent ne donne aucune variation δp.

Le test complet est normalement effectué en quelques secondes.

Les phases de mesure des micro-fuites et de contrôle de la présence d'échantillons, de sa non-perforation ainsi que la bonne fermeture de la chambre peuvent être interverties.

Afin de gagner du temps, la phase de contrôle peut être même supprimée si la mesure de fuite donne un résultat compris entre certaines valeurs limites prédéterminées.

On se limitera par exemple à n'effectuer le contrôle que si la fuite mesurée est nulle ou presque nulle, ce qui peut signifier que l'échantillon est grossièrement perforé ou absent, ou encore lorsque la fuite est très élevée, ce qui peut correspondre à une cellule mal fermée ou à un joint inétanche.

Tout ce qui vient d'être dit pour un appareil travaillant en dépression peut être repris si l'appareil fonctionne en surpression, c'est-à-dire avec un compresseur, une bouteille de gaz comprimé ou tout autre moyen adéquat.

**Revendications**

1. Procédé pour le contrôle d'étanchéité sur des emballages disposés dans un système comportant une partie incluant un moyen (P) pour ajuster la pression et au moins un réservoir (E₁) et une partie incluant une chambre de mesure (2) pour l'emballage à contrôler, dans lequel on établit une pression prédéterminée p1 dans la partie incluant le moyen pour ajuster la pression, on met en communication la partie à la pression p1 avec la partie contenant la chambre de mesure (2) fermée pour arriver à une pression p2, caractérisé en ce qu'on rétablit la pression dans tout le système à sa valeur initiale p1, on isole la partie contenant la chambre de mesure de celle ne la contenant pas et on mesure sur une durée prédéterminée entre ces deux parties la pression différentielle δp au moyen d'une cellule de pression différentielle pB placée entre ladite chambre de mesure (2) et ledit réservoir (E₁), celui-ci servant de référence de pression.

2. Procédé selon la revendication 1, caractérisé en ce qu'on détecte l'absence d'emballage, les grosses fuites sur l'emballage et l'inétanchéité de la chambre de mesure à l'aide de la cellule de pression différentielle pB.

3. Procédé selon l'une des revendications 1 et 2, caractérisé en ce qu'on opère avec un moyen (P) pour ajuster la pression travaillant en dépression ou en surpression.

4. Procédé selon l'une des revendications 1 à 3, caractérisé en ce que, pour des emballages souples, on effectue la mesure avec une chambre de mesure ayant une forme adaptée à l'emballage de manière à en limiter sa déformation.

5. Procédé selon l'une des revendications 1 à 4, caractérisé en ce que les paramètres de pression et de temps sont préréglés par voie électrique, en fonction du type d'emballage à contrôler.

6. Appareil pour la mise en œuvre du procédé selon l'une des revendications 1 à 5, caractérisé en ce qu'il comprend reliés en ligne par des canalisations
— un moyen (P) pour ajuster la pression,
— une électrovanne V1 servant d'actuateur pour le réglage de la pression p1,
— un réservoir de volume X1
— une cellule de pression relative pA,
— une électrovanne V3 permettant de séparer la partie comprenant le réservoir de celle comprenant la chambre de mesure,
— une électrovanne V4 aux extrémités de laquelle on mesure une pression différentielle avec
— une cellule de pression différentielle pB et
— une chambre de mesure (2) susceptible de recevoir l'emballage, ladite chambre comportant un couvercle (8) pour son ouverture et sa fermeture.

7. Appareil selon la revendication 6, caractérisé en ce que le moyen (P) pour ajuster la pression est une pompe à vide ou un compresseur.

8. Appareil selon l'une des revendications 6 ou 7, caractérisé en ce qu'il comprend en outre, directement reliées au moyen (P) pour ajuster la pression des vannes V6 et V7 permettant d'actionner un piston commandant l'ouverture et la fermeture de la chambre de mesure.

9. Appareil selon l'une des revendications 6 ou 7, caractérisé en ce qu'il comprend en outre entre la chambre de volume X1 et la cellule de pression relative pA, une vanne V2 et une chambre de volume X2<X1.

10. Appareil selon l'une des revendications 6 ou 7, caractérisé en ce qu'il comprend entre la chambre de mesure (2) et la cellule de pression différentielle pB une vanne V8 et une chambre de volume X3.

11. Appareil selon l'une des revendications 6 à 10, caractérisé en ce qu'il comporte un dispositif électronique (4) pour l'introduction et la mémorisation des paramètres de pression et de temps, la commande séquentielle des électrovannes, l'asservissement de la pression dans le réservoir, l'affichage des résultats des mesures et leur mise à disposition pour en permettre l'enregistrement et/ou le traitement par un dispositif extérieur.

**Patentansprüche**

1. Verfahren zur Kontrolle der Dichtheit von Verpackungen, die in einem System angeordnet sind, das einen Teil, der eine Druckeinstelleinrichtung (P) und zumindest einen Vorrat (E$_1$) aufweist, sowie einen Teil umfaßt, der eine Meßkammer (2) für die zu kontrollierende Verpackung aufweist, bei welchem Verfahren man einen vorbestimmten Druck p1 in dem die Druckeinstelleinrichtung aufweisenden Teil erzeugt und den Teil mit dem Druck p1 mit dem die geschlossene Meßkammer (2) enthaltenden Teil in Verbindung setzt, um auf einen Druck p2 zu gelangen, dadurch gekennzeichnet, daß man den Druck im gesamten System auf den Anfangsdruck p1 einstellt, daß man den die Meßkammer enthaltenden Teil von dem die Meßkammer nicht enthaltenden Teil isoliert und daß man während einer vorbestimmten Zeitspanne zwischen diesen Teilen den Differenzdruck δp mit Hilfe einer Differenzdruckzelle pB mißt, die zwischen der Meßkammer (2) und dem Vorrat (E$_1$) angeordnet ist, dessen Druck als Bezugsdruck dient.

2. Verfahren nach Anspruch 1, dadurch gekennzeichnet, daß man die Abwesenheit einer Verpackung, die Groblecks der Verpackung und die Undichtheit der Meßkammer mit Hilfe der Differenzdruckzelle pB ermittelt.

3. Verfahren nach den Ansprüchen 1 und 2, dadurch gekennzeichnet, daß man mit einer Druckeinstelleinrichtung (P) arbeitet, die mit Unterdruck oder Überdruck funktioniert.

4. Verfahren nach einem der Ansprüche 1 bis 3, dadurch gekennzeichnet, daß man für weiche Verpackungen die Messung mit einer Meßkammer vornimmt, die eine an die Verpackung angepaßte Form hat, wodurch deren Verformung begrenzt wird.

5. Verfahren nach einem der Ansprüche 1 bis 4, dadurch gekennzeichnet, daß die Parameter Druck und Zeit in Abhängigkeit von der zu kontrollierenden Verpackung auf elektrischem Wege voreingestellt werden.

6. Vorrichtung zur Durchführung des Verfahrens nach einem der Ansprüche 1 bis 5, dadurch gekennzeichnet, daß sie durch Leitungen untereinander verbunden aufweist
– eine Druckeinstelleinrichtung (P),
– ein Elektroventil V1, das als Stellglied zur Regelung des Druckes p1 dient,
– einen Vorrat mit dem Volumen X1,
– eine Relativdruckzelle pA,
– ein Elektroventil V3, das es gestattet, den den Vorrat enthaltenden Teil von dem die Meßkammer enthaltenden Teil zu trennen,
– ein Elektroventil V4, an dessen Enden man einen Differenzdruck mißt, mit
– einer Differenzdruckzelle pB und
– einer Meßkammer (2) zur Aufnahme der Verpackung, wobei diese Kammer einen Deckel (8) zum Öffnen und Schließen der Kammer aufweist.

7. Vorrichtung nach Anspruch 6, dadurch gekennzeichnet, daß die Druckeinstelleinrichtung (P) eine Vakuumpumpe oder ein Kompressor ist.

8. Vorrichtung nach Anspruch 6 oder 7, dadurch gekennzeichnet, daß ferner an die Druckeinstelleinrichtung (P) direkt Elektroventile V6 und V7 angeschlossen sind, die es ermöglichen, einen Kolben zu betätigen, welcher das Öffnen und Schließen der Meßkammer steuert.

9. Vorrichtung nach Anspruch 6 oder 7, dadurch gekennzeichnet, daß ferner zwischen der Kammer mit dem Volumen X1 und der Relativdruckzelle pA ein Elektroventil V2 und eine Kammer des Volumens X2<X1 vorgesehen sind.

10. Vorrichtung nach Anspruch 6 oder 7, dadurch gekennzeichnet, daß zwischen der Meßkammer (2) und der Differenzdruckzelle pB ein Elektroventil V8 und eine Kammer des Volumens X3 vorgesehen sind.

11. Vorrichtung nach einem der Ansprüche 6 bis 10, dadurch gekennzeichnet, daß eine elektronische Einrichtung (4) zum Eingeben und Speichern der Druck- und Zeitparameter, zur sequentiellen Steuerung der Elektroventile, zur Regelung des Druckes im Vorrat, zur Anzeige der Meßergebnisse und ihrer Bereitstellung zum Aufzeichnen und/oder Behandeln durch eine äußere Einrichtung vorgesehen ist.

**Claims**

1. A process for monitoring the tightness of packs disposed in a system comprising a section including means (P) for adjusting the pressure and at least one reservoir (E$_1$) and a section including a measuring chamber (2) for the pack to be monitored, in which a predetermined pressure p1 is established in the section including the means for adjusting the pressure, the section under the pressure p1 is placed in communication with the section containing the closed measuring chamber (2) to arrive at a pressure p2, characterized in that the pressure throughout the system is restored to its initial value p1, the section which contains the measuring chamber is isolated from that which does not contain the measuring chamber and the differential pressure $\delta p$ between these two sections is measured over a predetermined period by means of a differential pressure cell pB placed between said measuring chamber (2) and said reservoir ($E_1$), the reservoir serving as pressure reference.

2. A process as claimed in claim 1, characterized in that the absence of a pack, major leaks in the pack and any faults in the tightness of the measuring chamber are detected by means of the differential pressure cell pB.

3. A process as claimed in claims 1 and 2, characterized in that a means (P) for adjusting the pressure which operates under reduced pressure or under excess pressure is used.

4. A process as claimed in any of claims 1 to 3, characterized in that, for flexible packs, the measurement is effected with a measuring chamber adapted in its shape to the pack in order to limit the deformation thereof.

5. A process as claimed in any of claims 1 to 4, characterized in that the pressure and time parameters are electrically preset according to the type of pack to be monitored.

6. A device for carrying out the process claimed in any of claims 1 to 5, characterized in that it comprises the following components connected in line by conduits:
– a means (P) for adjusting the pressure,
– an electrovalve V1 acting as actuator to regulate the pressure p1,
– a reservoir of volume X1
– a relative pressure cell pA,
– an electrovalve V3 for separating the section comprising the reservoir from the section comprising the measuring chamber,
– and electrovalve V4 at the ends of which a differential pressure is measured by
– a differential pressure cell pB and
– a measuring chamber (2) dssigned to receive the pack, said chamber comprising a cover (8) by which it can be opened and closed.

7. A device as claimed in claim 6, characterized in that the means for adjusting the pressure is a vacuum pump or a compressor.

8. A device as claimed in claim 6 or 7, characterized in that it additionally comprises, directly connected to the means (P) for adjusting the pressure, valves V6 and V7 for actuating a piston which controls the opening and closing of the measuring chamber.

9. A device as claimed in claim 6 or 7, characterized in that it additionally comprises, between the chamber of volume X1 and the relative pressure cell pA, a valve V2 and a chamber of volume X2<X1.

10. A device as claimed in claim 6 or 7, characterized in that it comprises a valve V8 and a chamber of volume X3 between the measuring chamber (2) and the differential pressure cell pB.

11. A device as claimed in any of claims 6 to 10 characterized in that it comprises an electronic device (4) for the introduction and storage of pressure and time parameters, the sequential control of the electrovalves, the control of the pressure in the reservoir, the display of the measurement results and their presentation for recording and/or for processing by an outside terminal.

FIG. 1

**FIG. 2**

FIG. 3